# EUROPÄISCHE PATENTSCHRIFT

(11) **EP 2 050 640 B1**
(45) Veröffentlichungstag und Bekanntmachung des Hinweises auf die Patenterteilung: **09.11.2011**
(21) Anmeldenummer: 08105315.9
(22) Anmeldetag: 11.09.2008
(51) Int. Cl.: B60W 10/10, B60W 10/20, B60W 10/18, B60W 10/04, B60W 30/06, B60W 40/02

(54) **Steuereinrichtung und Verfahren zur Einparkunterstützung**
Control device and method for assisting parking
Dispositif de commande et procédé d'aide au stationnement

(30) Priorität: 17.10.2007 DE 102007049709
(43) Veröffentlichungstag der Anmeldung: 22.04.2009
(73) Patentinhaber: ROBERT BOSCH GMBH, 70442 Stuttgart (DE)
(72) Erfinder: Krautter, Wolfgang, 71229, Leonberg (DE); Scherl, Michael, 74321, Bietigheim (DE); Guenther, Clemens, 76275, Ettlingen (DE); Haug, Matthias, 70469, Stuttgart (DE)

(56) Entgegenhaltungen:
- WO-A-2004/050458
- DE-A1- 4 339 066
- FR-A- 2 855 481
- US-B1- 6 424 895

## Beschreibung

### Stand der Technik

Die Erfindung geht aus von einer Steuereinrichtung für eine Einparkvorrichtung und einem Verfahren zur Einparkunterstützung der entsprechend dem Oberbegriff des Anspruchs 1 und wie es aus dem Dokument WO 2004/050458 A1 bekannt ist. Aus der EP 0 849 144 A2 ist bereits eine Vorrichtung zum automatischen Steuern eines Fahrzeugs bekannt. Hierbei wird das Fahrzeug entlang eines berechneten Fahrwegs in eine Parklücke geführt. Ferner sind Überwachungsmittel vorhanden, die überwachen, ob sich ein Hindernis auf dem Fahrweg des Fahrzeugs befindet. Wird ein Hindernis erfasst, so wird der Einparkvorgang unterbrochen und es wird überprüft, ob noch eine andere Möglichkeit besteht, auf einem anderen Fahrweg in die Parklücke zu gelangen.

### Offenbarung der Erfindung

### Vorteile der Erfindung

Die erfindungsgemäße Steuereinrichtung für eine Einparkvorrichtung mit den Merkmalen des unabhängigen Anspruchs hat demgegenüber den Vorteil, dass nach einer automatischen Verzögerung des Fahrzeugs eine Unterstützung bei einem Einparkvorgang dann fortgesetzt wird, wenn das Hindernis nicht mehr erfasst wird. Denn nach der Verzögerung aufgrund des Hindernisses wird ein Hinweis auf ein mögliches Fortsetzen des Einparkvorgangs dann ausgegeben, wenn das Hindernis nicht mehr erfasst wird. Hiermit wird es ermöglicht, dass ein nur temporär auftretendes Hindernis nicht zu einem Abbruch des Einparkvorgangs führt. Damit wird es ermöglicht, dass ein Fahrer bei einem automatischen Einparken abwarten kann, bis sich ein temporäres Hindernis nicht mehr auf dem bisher berechneten Einparkweg befindet, um den Einparkvorgang dann fortzusetzen. Insbesondere wird es dabei ermöglicht, dass beispielsweise der Fahrer auch die Gelegenheit hat, das Hindernis selbst zu beseitigen, z. B. einen umgestürzten Gegenstand. Zudem wird ein überraschendes Losfahren des Fahrzeugs vermieden, wenn der Fahrer über ein mögliches Fortsetzen des Einparkvorgangs rechtzeitig informiert wird. Er kann somit ein größeres Vertrauen zu einem Einparksystem fassen, das das Fahrzeug zumindest teilweise automatisch steuert.

Durch die in den abhängigen Ansprüchen aufgeführten Maßnahmen sind vorteilhafte Weiterbildungen und Verbesserungen der in dem unabhängigen Anspruch angegebenen Steuereinrichtung möglich. So ist es vorteilhaft, das Fortsetzen des Einparkens von einer Betätigung einer Eingabeeinheit abhängig zu machen. Damit kann das Einparken nur dann fortgesetzt werden, wenn der Fahrer aktiv einer Fortsetzung des Einparkens zugestimmt hat. Eine solche Bestätigung ist insbesondere dann vorteilhaft, wenn von einer Erfassungseinheit schwer zu erfassende Hindernisse oder von ihrer Bewegung schwer voraus zu berechnende Hindernisse den Einparkweg blockieren. So kann es ermöglicht werden, dass ein Fahrer beispielsweise ein kleines Haustier, das den Einparkweg nur temporär blockiert hat, zunächst aus dem Umfeld des Einparkwegs entfernen und damit in Sicherheit bringen kann, bevor der Einparkvorgang fortgesetzt wird. Durch eine erforderliche Zustimmung kann zudem ein überraschender Effekt eines selbstständigen Losfahrens des Fahrzeugs vollständig vermieden werden.

Ferner ist es vorteilhaft, eine Schnittstelle zu einer Eingabeeinheit zum Abbruch des Einparkvorgangs vorzusehen, wenn sich beispielsweise die Einparksituation dauerhaft geändert hat. Der Fahrer kann dies leicht erkennen und kann somit den Einparkvorgang auch selbstständig abbrechen.

Ferner ist es vorteilhaft, eine Vergleichereinheit vorzusehen, mit der die bereits im Vorfeld erfasste Fahrzeugumgebung mit der aktuell während des Einparkens erfassten Fahrzeugumgebung verglichen wird. Durch diesen Vergleich kann beispielsweise festgestellt werden, ob sich eine bereits im Vorfeld vermessene Begrenzung der Parklücke nur leicht verändert hat, oder ob sich ein völlig unerwartetes und damit höchst wahrscheinlich nur temporär auftretendes Hindernis im Bereich des Einparkwegs befindet. Bei einer Ungenauigkeit einer Vermessung ist es ratsam, gegebenenfalls den berechneten Einparkweg an die tatsächlichen Verhältnisse anzupassen. Ist dagegen ein möglicherweise nur kurzfristig auftretendes Hindernis, wie beispielsweise ein über den Einparkweg gehender Fußgänger erfasst worden, ist es ratsam, den Einparkvorgang erfindungsgemäß nur kurz zu unterbrechen und ein mögliches Fortsetzen des Einparkvorgangs dem Fahrer zumindest anzuzeigen.

Vorteilhaft ist ferner ein automatisches Einparken des Fahrzeugs, bei dem auf die Fahrzeuglenkung und/oder auf eine Antriebseinheit des Fahrzeugs zugegriffen wird, und bei der nur ein eingeschränkter oder eventuell auch gar kein Fahrereingriff mehr erforderlich ist. Hierdurch kann besonders sicher und komfortabel eingeparkt werden.

Die erfindungsgemäßen Vorteile ergeben sich ebenfalls für ein Verfahren zur Einparkunterstützung, bei dem ein Fahrer auf ein mögliches Fortsetzen des Einparkvorgangs für den Fall hingewiesen wird, dass ein in dem Einparkweg erfasstes Hindernis nunmehr nicht mehr erfasst wird.

Ferner ist es vorteilhaft, für den Fall das Einparkverfahren automatisch abzubrechen, wenn ein erfasstes Hindernis auch nach einer vorgegebenen Zeitspanne von beispielsweise zehn oder mehr Sekunden immer noch erfasst wird. In diesem Fall ist mit einer dauerhaften Veränderung der Abmessung der Parklücke zu rechnen.

### Kurze Beschreibung der Zeichnungen

Ausführungsbeispiele der Erfindung sind in der Zeichnung dargestellt und in der nachfolgenden Beschreibung näher erläutert. Es zeigen
Figur 1 eine schematische Darstellung eines Fahrzeugs mit einer erfindungsgemäßen Steuereinrichtung zur Durchführung des erfindungsgemäßen Verfahrens in einer Aufsicht,
Figur 2 eine Fahrsituation eines Fahrzeugs in einer schematischen Darstellung in Aufsicht zur Erläuterung des erfindungsgemäßen Verfahrens,
Figur 3 ein Ausführungsbeispiel für einen Verfahrensablauf des erfindungsgemäßen Verfahrens.

### Ausführungsformen der Erfindung

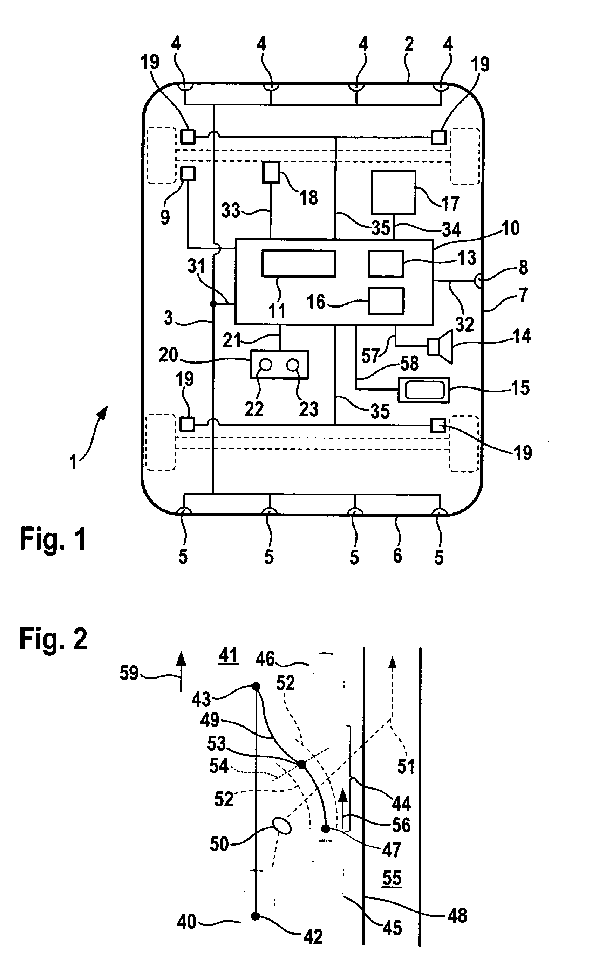

In der Figur 1 ist ein Kraftfahrzeug 1 dargestellt, das mit einer erfindungsgemäßen Steuereinrichtung 10 ausgestattet ist. Die Steuereinrichtung 10 ist über einen Datenbus 3 mit Abstandssensoren 4 an einer Vorderseite 2 des Fahrzeugs 1 verbunden. Ferner ist die Steuereinrichtung 10 mit Abstandssensoren 5 an einer Rückseite 6 des Fahrzeugs 1 verbunden. Darüber hinaus ist wenigstens an einer Fahrzeuglängsseite, beispielsweise an der rechen Fahrzeuglängsseite 7, ein weiterer Abstandssensor 8 angeordnet. Die Abstandssensoren 4, 5 sind über eine erste Schnittstelle 31 mit der Steuereinrichtung 10 verbunden. Der Abstandsensor 8 ist über eine zweite Schnittstelle 32 mit der Steuereinrichtung 10 verbunden. Die Steuereinrichtung 10 steuert die Abstandssensoren 4, 5, 8 an und wertet die gemessenen Abstandsinformationen aus, um Hindernisse in einer Umgebung des Fahrzeugs 1 zu erfassen.

Die Abstandssensoren 4, 5, 8 sind beispielsweise als Ultraschallsensoren ausgebildet. Ferner ist es jedoch auch möglich, optische Sensoren oder Radarsensoren zu verwenden. Die Steuereinrichtung 10 ist ferner mit einem Wegsensor 9 verbunden, über den eine zurückgelegte Wegstrecke des Fahrzeugs an die Steuereinrichtung 10 übermittelt wird. Die Steuereinrichtung 10 weist eine Recheneinheit 11 auf, die dazu ausgelegt ist, die Abstandswerte, die über die Abstandssensoren 4, 5, 8 gemessen werden, mit der zurückgelegten und über den Wegstreckensensor 9 gemessenen Wegstrecke des Fahrzeugs 1 derart zu verbinden, dass ein Umgebungsmodell der in der Umgebung des Fahrzeugs 1 vorhandenen Hindernisse bestimmt wird. Eine entsprechende Umgebungskarte kann in einem Speicher 13 der Steuereinrichtung 10 abgelegt werden.

Bewegt sich das Fahrzeug auf ein Hindernis zu, so kann über einen Lautsprecher 14 ein akustischer Alarm ausgegeben werden. Ferner kann alternativ oder ergänzend hierzu auch ein Alarm über eine Anzeige 15 ausgegeben werden. Der Lautsprecher 14 ist über eine Schnittstelle 57 und die Anzeige 15 ist über eine Schnittstelle 58 mit der Steuereinrichtung 10 verbunden. Fährt das Fahrzeug seitlich an einer sich neben dem Fahrzeug in Längsrichtung befindenden Parklücke vorbei, so ist die Recheneinheit 11 dazu ausgelegt, die gemessenen Abstandswerte mit den in einem Speicher 16 abgelegten Fahrzeugmaßen derart zu vergleichen, dass bestimmt werden kann, ob ein Einparken in die erfasste Parklücke möglich ist. Hierbei werden die über den Abstandssensor 8 gemessenen Abstandswerte in Bezug zu der über den Wegstreckensensor 9 gemessenen, gefahrenen Wegstrecke gesetzt.

Ist ein Einparken möglich, so wird vorzugsweise ein Hinweis an den Fahrer in der Anzeige 15 und/oder über den Lautsprecher 14 ausgegeben. In einer ersten Ausführungsform kann ein Einparken vollautomatisch erfolgen. Hierzu ist die Steuereinrichtung 10 mit einem Fahrzeugantrieb 17 zur Beschleunigung des Fahrzeugs verbunden. Ferner ist die Steuereinrichtung 10 mit einer Lenksteuereinheit 18 zum Beeinflussen einer Lenkung des Fahrzeugs verbunden. Um das Fahrzeug bei einer Annäherung an ein Hindernis abbremsen zu können, ist die Steuereinrichtung 10 ferner mit Fahrzeugbremsen 19 verbunden.

Die Lenksteuereinheit 18 ist über eine Schnittstelle 33 mit der Steuereinrichtung 10 verbunden. Die Antriebseinheit 17 ist über eine Schnittstelle 34 und die Bremseinheit 19 ist über eine Schnittstelle 35 mit der Steuereinrichtung 10 verbunden. In einer Ausführungsform können die Schnittstellen 33, 34, 35 auch derart ausgebildet sein, dass die Steuereinrichtung 10 lediglich an einen Fahrzeugdatenbus angeschlossen ist, beispielsweise einen CAN-Bus, der die Steuereinrichtung sowohl mit der Lenksteuereinheit 18, dem Fahrzeugantrieb 17 und der Bremseinrichtung 19 verbindet.

Unterschreitet der Abstand, der von den Abstandssensoren 4, 5, 8 gemessen wird, eine vorgegebene Grenze von beispielsweise 20 cm, so wird das Fahrzeug über eine Ansteuerung der Bremsen 19 von der Steuereinrichtung 10 automatisch gebremst. Um das automatische Einparken durchzuführen, berechnet die Recheneinheit 11 der Steuereinrichtung 10 eine Fahrstrecke von der aktuellen Fahrzeugposition unter Zugriff auf das in dem Speicher 13 abgelegte Modell der Fahrzeugumgebung, das auch die Parklücke mit einschließt. Die Lenksteuereinheit 18 und der Fahrzeugantrieb 17 werden entsprechend zum Einparken in die Parklücke angesteuert.

In einer alternativen Ausführungsform ist es auch möglich, nur eine Ansteuerung der Fahrzeugbremsen 19 vorzusehen, während Anweisungen zum Lenken und zum Beschleunigen des Fahrzeugs über die Anzeigeeinrichtung 15 und unter den Lautsprecher 14 ausgegeben werden. Alternativ ist es auch möglich, die Bremsen und den Fahrzeugantrieb anzusteuern und das Lenken dem Fahrer zu überlassen. Ferner ist es auch möglich, Bremen und die Fahrzeuglenkung anzusteuern und das Beschleunigen dem Fahrer zu überlassen. Insbesondere ist es bei einer Ansteuerung des Fahrzeugantriebs vorteilhaft, bei einem Automatikfahrzeug auch eine Gangwahl des automatischen Fahrzeuggetriebes vorzunehmen.

Wird von den Abstandsensoren 4, 5, 8 während des Einparkvorgangs ein Hindernis in dem berechneten Fahrweg des Fahrzeugs erfasst, so wird das Fahrzeug über die Bremse 19 vorzugsweise bis zu einem Stillstand des Fahrzeugs 1 abgebremst. Im Folgenden wird die Fahrzeugumgebung auf dem Fahrweg weiter überwacht. Wird das Hindernis nach einer beispielsweise durch einen Wert in dem Speicher 16 vorgegebenen Zeitspanne von zehn Sekunden nicht mehr erfasst, so wird eine Fortsetzung des Einparkvorgangs über die Anzeige 15 und/oder den Lautsprecher 14 dem Fahrer angekündigt. Nach der vorgegebenen Zeitspanne wird das Einparken dann in einer ersten Ausführungsform automatisch fortgesetzt, wenn kein Abbruch des Einparkvorgangs durch den Fahrer erfolgt. In einer anderen Ausführungsform wird der Fahrer über die Anzeige 15 und/oder den Lautsprecher 14 nur darauf hingewiesen, dass das Hindernis auf dem Fahrweg nicht mehr erfasst wird, beispielsweise durch die akustische Ausgabe "Strecke ist wieder frei". Eine Fortsetzung des Einparkvorgangs unterbleibt dennoch jedoch solange, bis von dem Fahrer eine zugehörige Eingabeeinheit 20 betätigt wird, die über eine Schnittstelle 21 mit der Steuereinrichtung 10 verbunden ist. Die Eingabeeinheit 20 weist beispielsweise einen ersten Drucktaster 22 zum Fortsetzen eines Einparkvorgangs auf. Ist der Fahrer der Auffassung, dass er den Einparkvorgang lieber abbrechen möchte, so weist in einer weiteren Ausführungsform die Eingabeeinheit 20 einen zweiten Drucktaster 23 auf, über den der Einparkvorgang abgebrochen werden kann.

Ein Ausführungsbeispiel für eine Fahrsituation zur Erläuterung des erfindungsgemäßen Verfahrens und zur Verwendung der erfindungsgemäßen Steuereinrichtung ist in der Figur 2 dargestellt. Ein Fahrzeug 40, das gemäß dem Fahrzeug 1 ausgestattet ist, wird in einer Straße 41 in Pfeilrichtung 59 gefahren, wobei ein Abstandsensor auf der rechten Fahrzeugseite zum Erfassen einer Parklücke aktiviert ist. Der Abstandsensor erfasst bei einer Fahrstrecke des Fahrzeugs 40 von einer ersten Position 42 zu einer zweiten Position 43 eine Parklücke 44 zwischen einem ersten Fahrzeug 45 und einem zweiten Fahrzeug 46, das in Fahrtrichtung beabstandet zu dem ersten Fahrzeug 45 geparkt ist. Die Steuereinrichtung 10 stellt dabei fest, dass die Parklücke 44 für ein Einparken des Fahrzeugs 40 ausreichend groß ist. Der Fahrer wird somit aufgefordert, an der zweiten Position 43 zu halten. Ferner ist es auch möglich, dass ein Abbremsen an der zweiten Position 43 automatisch erfolgt. Die dargestellten Positionen bezeichnen hierbei jeweils einen Mittelpunkt der Hinterachse des Fahrzeugs 40.

Ausgehend von der zweiten Position 43 berechnet nun die Steuereinrichtung 10 einen Einparkweg 52, der von der zweiten Position 43 zu einer Endposition 47 innerhalb der Parklücke 44 derart führt, dass das Fahrzeug parallel zu einer Bordsteinkante 48 in der Parklücke 44 ausgerichtet wird. Nun beginnt der teilweise automatische oder auch vollautomatische Einparkvorgang ausgehend von der Position 43. Das Fahrzeug setzt entsprechend der Fahrstrecke 49 in die Parklücke 44 zurück. Während des Einparkvorgangs betritt jedoch ein Fußgänger 50, der sich entsprechend der gestrichelten Linie 51 fortbewegt, von der linken Seite des Fahrzeugs 45 kommend den Fahrweg 52 des Fahrzeugs, der ebenfalls gestrichelt in die Figur 2 eingetragen ist. Die rückwärtigen Abstandsensoren des Fahrzeugs 40 erfassen den Fußgänger 50, so dass das Fahrzeug an der dritten Position 53 automatisch durch eine Ansteuerung der Bremsen durch die Steuereinrichtung 10 an der gepunkteten Linie 54 angehalten wird. Der Fußgänger setzt nun seinen Weg entsprechend der eingezeichneten, gestrichelten Linie derart fort, dass er nach einiger Zeit den Bürgersteig 55 betritt.

Die Steuereinrichtung 10 hat festgestellt, dass der Fußgänger 50 als ein erfasstes Hindernis plötzlich aufgetreten ist, da er als ein Hindernis erfasst wird, das nicht mit Positionen von Begrenzungen der zuvor erfassten Parklücke übereinstimmt. Daher wird das Fahrzeug zunächst an der dritten Position 53 angehalten. Nach einiger Zeit hat der Fußgänger 50 den Erfassungsbereich der rückwärtigen Sensoren des Fahrzeugs 40 verlassen. Es wird dem Fahrer angezeigt, dass das Hindernis nun nicht mehr vorhanden ist. Entsprechend kann der Einparkvorgang nunmehr automatisch oder nach Bestätigung durch den Fahrer fortgesetzt werden, so dass das Fahrzeug nach einiger Zeit die Endposition 47 erreichen kann.
Wäre dagegen in einer anderen Situation das Fahrzeug 45 vorgefahren entsprechend der Pfeilrichtung 56, so hätten sich die Abmaße der Parklücke 44 gegebenenfalls längerfristig verändert. Ein Einparken wäre dann gegebenenfalls nicht mehr möglich gewesen. Nach Ablauf einer vorgegebenen Zeit nach einer Erfassung der geänderten Parklückenbegrenzung wäre entsprechend an den Fahrer bei einer Positionierung des Fahrzeugs an der dritten Position 53 die Empfehlung ausgegeben worden, den Einparkvorgang abzubrechen, da sich ein Hindernis dauerhaft in dem Einparkweg 52 befindet. Möglicherweise hätte der Fahrer aber bei einer Ausgabe dieser Empfehlung in einer anderen Situation gegebenenfalls die Möglichkeit, ein Hindernis, beispielsweise einen umgefallenen Gegenstand, selbstständig aus dem Einparkweg 52 zu entfernen, um danach den Einparkvorgang fortzusetzen.

In einer weiteren Ausführungsform ist es möglich, beispielsweise ein Öffnen einer Türe des Fahrzeugs 40 zu erfassen. Wird die Fahrzeugtüre geöffnet, so kann der Einparkvorgang nur dann fortgesetzt werden, wenn der Fahrer eine ausdrückliche Bestätigung zur Fortsetzung des Einparkvorgangs eingibt, auch wenn die Fahrzeugtüre bereits wieder geschlossen wurde.

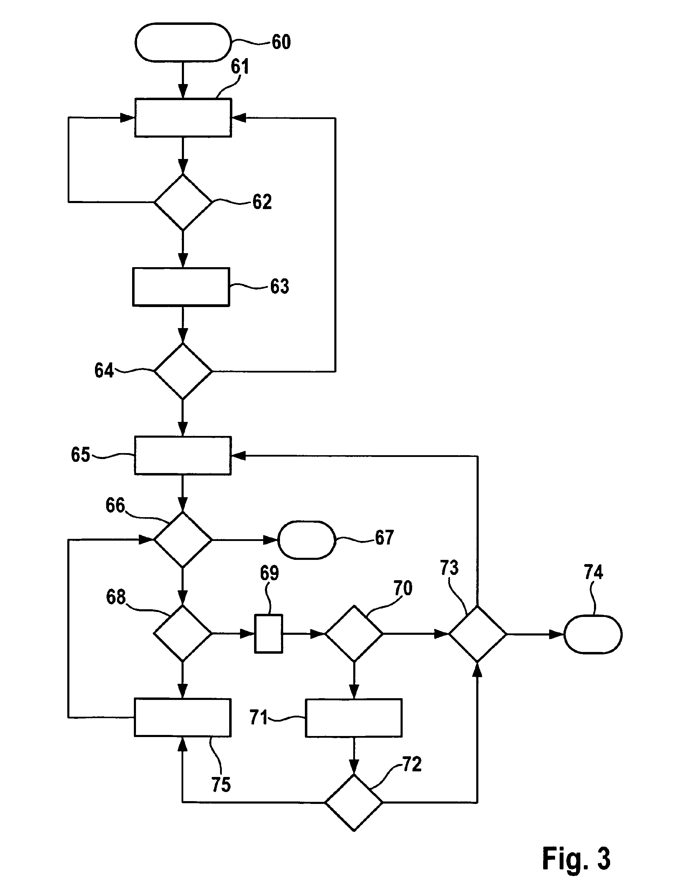

Ein Ausführungsbeispiel für einen erfindungsgemäßen Verfahrensablauf ist in der Figur 3 dargestellt. Ausgehend von einem Initialisierungsschritt 60 wird eine Parklückenvermessung aktiviert. In einem anschließenden Messschritt 61 wird ein seitlicher Abstandsensor in einem Fahrzeug aktiviert und es wird nach einer für das Fahrzeug geeigneten Parklücke gesucht. In einem anschließenden ersten Prüfschritt 62 wird überprüft, ob eine geeignete Parklücke gefunden wurde. Ist dies nicht der Fall, so wird zu dem Parklückenvermessungsschritt 61 zurückverzweigt. Wurde eine geeignete Parklücke gefunden, so wird zu einem ersten Ausgabeschritt 63 verzweigt, in dem der Fahrer akustisch und/oder optisch auf das Auffinden einer geeigneten Parklücke hingewiesen wird. In einem anschließenden zweiten Prüfschritt 64 wird abgefragt, ob der Fahrer ein Einparken wünscht. Ist dies nicht der Fall, so betätigt der Fahrer beispielsweise eine entsprechende Abbruch-Taste. Es wird dann zu dem Parklückenvermessungsschritt 61 zurückverzweigt und die Parklückenvermessung wird fortgesetzt. Wünscht der Fahrer dagegen ein Einparken, so wird zu einem Berechnungsschritt 65 verzweigt, indem ein Einparkweg von der aktuellen Fahrzeugposition unter Berücksichtigung der erfassten Umgebung des Fahrzeugs berechnet wird. In einem anschließenden dritten Prüfschritt 66 wird überprüft, ob die Endparkposition bereits erreicht wurde. Ist dies der Fall, so wird zu einem Endschritt 67 verzweigt und das Verfahren wird beendet. Ist die endgültige Parkposition noch nicht erreicht, so wird zu einem vierten Prüfschritt 68 verzweigt, in dem überprüft wird, ob der berechnete Fahrweg vor dem Fahrzeug zumindest für einen vorgegebenen Abstand von beispielsweise fünf Metern frei ist. Ist der Fahrweg frei, so wird zu einem Fahrschritt 75 verzweigt und das Fahrzeug wird automatisch ein Stück den Fahrweg entlang geführt. In einer anderen Ausführungsform ist es auch möglich, dass ein Fahrer zumindest einen Teil der Fahrzeugsysteme betätigen muss, um das Fahrzeug entlang des Fahrwegs zu führen. Nach Zurücklegen einer vorgegebenen Fahrstrecke von beispielsweise 10 bis 15 cm wird zu dem dritten Prüfschritt 66 zurückverzweigt. Wird in dem vierten Prüfschritt 68 ein Hindernis auf dem Fahrweg festgestellt, so wird zu einem Bremsschritt 69 verzweigt, in dem das Fahrzeug abgebremst wird, gegebenenfalls bis zum Stillstand des Fahrzeugs. Anschließend wird in einem fünften Prüfschritt überprüft, ob nach Ablauf einer vorgegebenen Zeitspanne das Hindernis noch erfasst wird. Die vorgegebene Zeitspanne liegt beispielsweise in einem Intervall zwischen zehn und zwanzig Sekunden. Wird das Hindernis nicht mehr erfasst, so wird zu einem zweiten Ausgabeschritt 71 verzweigt, in dem dem Fahrer angezeigt wird, dass das Hindernis nicht mehr erfasst wird. In einem anschließenden siebten Prüfschritt 72 wird überprüft, ob der Fahrer eine Eingabeeinheit zum Fortsetzen des Einparkvorgangs betätigt hat. Ist dies der Fall, so wird zu dem Fahrschritt 75 verzweigt und das Fahrzeug wird entlang des zuvor berechneten Fahrwegs geführt. Lehnt der Fahrer ein Fortsetzen des Einparkvorgangs ab, so wird in einem achten Prüfschritt 73 überprüft, ob der Fahrer eine Neuberechnung des Einparkwegs in die Parklücke von der aktuellen Fahrzeugposition oder einen Abbruch des Einparkvorgangs wünscht. Wünscht er einen Abbruch des Einparkvorgangs, so wird zu einem Endschritt 74 verzweigt und das Verfahren wird abgebrochen. Wünscht der Fahrer eine Neuberechnung, so wird zu dem Berechnungsschritt 65 zurückverzweigt. Der achte Prüfschritt 73 wird auch dann erreicht, wenn in dem sechsten Prüfschritt 70 festgestellt wird, dass nach Ablauf der vorgegebenen Zeitspanne das erfasste Hindernis immer noch in dem Fahrweg des Fahrzeugs vorhanden ist.

## Patentansprüche

1. Steuereinrichtung (10) für eine Einparkvorrichtung mit einer Schnittstelle (31, 32) zu einer Erfassungseinheit (4, 5, 8) zur Erfassung einer Umgebung eines Fahrzeugs (1, 40), mit einer Recheneinheit (11) zur Berechnung eines Einparkwegs (52) des Fahrzeugs (1, 40) in eine Parklücke (44) und mit einer Schnittstelle (35) zu wenigstens einem Bremssystem (19) des Fahrzeugs (1, 40) zum Verzögern des Fahrzeugs (1, 40) bei einem erfassten Hindernis (50) innerhalb des Einparkwegs (52) in die Parklücke (44), **gekennzeichnet durch** eine Schnittstelle (57, 58) zu einer Ausgabeeinheit (14, 15) zur Ausgabe eines Hinweises auf ein mögliches Fortsetzen des Einparkvorgangs für den Fall, dass das Hindernis (50) nicht mehr erfasst wird, weiter **gekennzeichnet durch** einen Speicher (13) zum Speichern einer erfassten Fahrzeugumgebung und **durch** eine Vergleichereinheit (11) zum Vergleich der vor dem Einparken erfassten Fahrzeugumgebung mit einer während des Einparken erfassten Fahrzeugumgebung zum Ermitteln einer kurzfristigen Veränderung in der Fahrzeugumgebung.

2. Steuereinrichtung nach Anspruch 1, **gekennzeichnet durch** eine Schnittstelle (21) zu einer Eingabeeinheit (20) zur Eingabe eines Fortsetzens des Einparkvorgangs auf dem zuvor berechneten Einparkweg.

3. Steuereinrichtung nach einem der vorhergehenden Ansprüche, **gekennzeichnet durch** eine Schnittstelle (21) zu einer Eingabeeinheit (20) zur Eingabe eines Abbruchs des Einparkvorgangs.

4. Steuereinrichtung nach einem der vorhergehenden Ansprüche, **gekennzeichnet durch** wenigstens eine Schnittstelle (33, 34) zu einer Fahrzeuglenkung (18) und/oder zu einer Antriebseinheit (17) des Fahrzeugs zu einem automatischen Lenken und/oder Beschleunigen des Fahrzeugs entlang des berechneten Einparkwegs.

5. Verfahren zur Einparkunterstützung, wobei eine Umgebung eines Fahrzeugs (1, 40) erfasst wird und wobei ein Einparkweg (52) des Fahrzeugs (1, 40) in eine Parklücke (44) berechnet wird, wobei das Fahrzeug (1, 40) bei einem erfassten Hindernis (50) auf dem Einparkweg (52) in die Parklücke (44) verzögert wird, **dadurch gekennzeichnet, dass** ein Hinweis auf ein mögliches Fortsetzen des Einparkvorgangs für den Fall ausgegeben wird, dass das Hindernis (50) nicht mehr erfasst wird, dass ein Speicher (13) zum Speichern einer erfassten Fahrzeugumgebung vorgesehen wird und dass durch eine Vergleichereinheit (11) zum Vergleich der vor dem Einparken erfassten Fahrzeugumgebung mit einer während des Einparkens erfassten Fahrzeugumgebung zum Ermitteln einer kurzfristigen Veränderung in der Fahrzeugumgebung durchgeführt wird.

6. Verfahren nach Anspruch 5, **dadurch gekennzeichnet, dass** nach Ablauf einer vorgegebenen Zeitspanne nach dem ersten Erfassen des Hindernisses (50) für den Fall, dass das Hindernis (50) immer noch erfasst wird, ein Hinweis auf einen möglichen Abbruch des Einparkvorgangs ausgegeben wird.

7. Verfahren nach einem der Ansprüche 5 oder 6, **dadurch gekennzeichnet, dass** das Fahrzeug zumindest teilweise automatisch entlang des Einparkwegs (52) in die Parklücke (44) geführt wird.

## Claims

1. Control device (10) for a parking apparatus having an interface (31, 32) with a sensing unit (4, 5, 8) for sensing the surroundings of a vehicle (1, 40), having a computing unit (11) for calculating a parking path (52) of the vehicle (1, 40) into a parking space (44) and having an interface (35) with at least one brake system (19) for the vehicle (1, 40) for decelerating the vehicle (1, 40) when an obstacle (50) is sensed within the parking path (52) into the parking space (44), **characterized by** an interface (57, 58) with an output unit (14, 15) for outputting an indication of possible continuation of the parking procedure in case the obstacle (50) is no longer sensed, further **characterized by** a memory (13) for storing sensed vehicle surroundings and by a comparator unit (11) for comparing the vehicle surroundings sensed before the parking process with vehicle surroundings sensed during the parking process, in order to determine a short-term change in the vehicle surroundings.

2. Control device according to Claim 1, **characterized by** an interface (21) with an input unit (20) for inputting continuation of the parking procedure on the previously calculated parking path.

3. Control device according to one of the preceding claims, **characterized by** an interface (21) with an input unit (20) for inputting aborting of the parking procedure.

4. Control device according to one of the preceding claims, **characterized by** at least one interface (33, 34) with a vehicle steering system (18) and/or with a drive unit (17) of the vehicle for automatically steering and/or accelerating the vehicle along the calculated parking path.

5. Method for assisting parking, wherein surroundings of a vehicle (1, 40) are sensed and wherein a parking path (52) of the vehicle (1, 40) into a parking space (44) is calculated, wherein the vehicle (1, 40) is decelerated when an obstacle (50) is sensed on the parking path (52) into the parking space (44), **characterized in that** an indication of possible continuation of the parking procedure is output in case the obstacle (50) is no longer sensed, **in that** a memory (13) for storing sensed vehicle surroundings is provided, and **in that** a comparator unit (11) carries out a comparison of the vehicle surroundings sensed before the parking process with vehicle surroundings sensed during the parking process in order to determine a short-term change in the vehicle surroundings.

6. Method according to Claim 5, **characterized in that** after the expiry of a predefined time period after the first sensing of the obstacle (50), an indication of possible aborting of the parking procedure is output in case the obstacle (50) is still sensed.

7. Method according to one of Claims 5 or 6, **characterized in that** the vehicle is guided at least partially automatically along the parking path (52) into the parking space (44).

## Revendications

1. Équipement de commande (10) pour un dispositif de mise en stationnement comprenant une interface (31, 32) vers une unité de détection (4, 5, 8) pour détecter un environnement d'un véhicule (1, 40), comprenant une unité de calcul (11) pour calculer une trajectoire de mise en stationnement (52) du véhicule (1, 40) dans un créneau de stationnement (44) et comprenant une interface (35) vers au moins un système de freinage (19) du véhicule (1, 40) pour ralentir le véhicule (1, 40) en présence d'un obstacle (50) détecté à l'intérieur de la trajectoire de mise en stationnement (52) dans le créneau de stationnement (44), **caractérisé par** une interface (57, 58) vers une unité de sortie (14, 15) pour délivrer une notification d'une poursuite possible de la manoeuvre de mise en stationnement dans le cas où l'obstacle (50) n'est plus détecté, **caractérisé en outre par** une mémoire (13) pour mémoriser un environnement détecté du véhicule et par une unité de comparaison (11) pour comparer l'environnement du véhicule détecté avant la mise en stationnement avec un environnement du véhicule détecté pendant la mise en stationnement afin de déterminer une modification à court terme dans l'environnement du véhicule.

2. Équipement de commande selon la revendication 1, **caractérisé par** une interface (21) vers une unité d'entrée (20) pour entrer une poursuite de la manoeuvre de mise en stationnement sur la trajectoire de mise en stationnement calculée précédemment.

3. Équipement de commande selon l'une des revendications précédentes, **caractérisé par** une interface (21) vers une unité d'entrée (20) pour entrer une interruption de la manoeuvre de mise en stationnement.

4. Équipement de commande selon l'une des revendications précédentes, **caractérisé par** au moins une interface (33, 34) vers une direction de véhicule (18) et/ou vers une unité d'entraînement (17) du véhicule pour un changement de direction et/ou une accélération automatique du véhicule le long de la trajectoire de mise en stationnement calculée.

5. Procédé d'assistance à la mise en stationnement, un environnement du véhicule (1, 40) étant détecté et une trajectoire de mise en stationnement (52) du véhicule (1, 40) dans un créneau de stationnement (44) étant calculée, le véhicule (1, 40) étant ralenti en présence d'un obstacle (50) détecté sur la trajectoire de mise en stationnement (52) dans le créneau de stationnement (44), **caractérisé en ce qu'**une notification d'une poursuite possible de la manoeuvre de mise en stationnement est délivrée dans le cas où l'obstacle (50) n'est plus détecté, **en ce qu'**il est prévu une mémoire (13) pour mémoriser un environnement détecté du véhicule et **en ce qu'**une comparaison est effectuée par une unité de comparaison (11) pour comparer l'environnement du véhicule détecté avant la mise en stationnement avec un environnement du véhicule détecté pendant la mise en stationnement afin de déterminer une modification à court terme dans l'environnement du véhicule.

6. Procédé selon la revendication 5, **caractérisé en ce qu'**après écoulement d'un intervalle de temps prédéfini après la première détection de l'obstacle (50), dans le cas où l'obstacle (50) est toujours détecté, une notification d'une interruption possible de la manoeuvre de mise en stationnement est délivrée.

7. Procédé selon l'une des revendications 5 ou 6, **caractérisé en ce que** le véhicule est guidé au moins partiellement automatiquement le long de la trajectoire de mise en stationnement (52) dans le créneau de stationnement (44).
